# EUROPEAN PATENT APPLICATION

(11) **EP 2 093 266 A1**
(43) Date of publication of application: **26.08.2009**
(21) Application number: 08101958.0
(22) Date of filing: 25.02.2008
(51) Int. Cl.: C09D 177/00, C08L 101/00, C03C 25/10, C08G 83/00

(54) **Aqueous binder composition**

(71) Applicant: Rockwool International A/S, 2460 Hedehusene (DK)
(72) Inventor: Brehmer, Bo, 2650 Hvidovre (DK); Hult, Anders, 10044 Stockholm (SE)
(74) Representative: Barz, Peter

(57) **Abstract**

An aqueous binder composition comprises a water-soluble binder component obtained by reacting a dendritic compound with
(A) a polyhydroxy compound and/or an alkanolamine and/or a polyamine; and
(B) a polycarboxylic acid and/or a carboxylic acid anhydride and optionally, treating the reaction product with a base.

## Description

### Field of the Invention

The present invention relates to an aqueous binder composition which provides bonded products having improved application properties, in particular, a higher curing speed, improved water resistance and reduced moisture uptake. Furthermore, the present invention relates to a method of producing a bonded mineral fibre product using said binder composition, and a mineral fibre product comprising mineral fibres in contact with the cured binder.

### Background of the Invention

Mineral fibre products generally comprise man-made vitreous fibres (MMVF) such as, e.g., glass fibres, ceramic fibres, basalt fibres, slag wool, mineral wool and stone wool, which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process. The fibres are blown into a forming chamber and, while airborne and while still hot, are sprayed with a binder solution and randomly deposited as a mat or web onto a travelling conveyor. The fibre mat is then transferred to a curing oven where heated air is blown through the mat to cure the binder and rigidly bond the mineral fibres together.

In the past, the binder resins of choice have been phenol/formaldehyde resins which can be economically produced and can be extended with urea prior to use as a binder. However, the desire to minimize Volatile Organic Compound (VOC) emissions from products in conjunction with existing and proposed legislation directed to the lowering or elimination of formaldehyde have led to the development of formaldehyde-free binders such as, for instance, the binder compositions based on polycarboxy polymers and polyols or polyamines, such as disclosed in EP-A-583086, EP-A-990727, EP-A-1741726, US-A-5,318,990 and US-A-2007/0173588.

Another group of non-phenol/formaldehyde binders are the addition/- elimination reaction products of aliphatic and/or aromatic anhydrides with alkanolamines, e.g., as disclosed in WO 99/36368, WO 01/05725, WO 01/96460, WO 02/06178, WO 2004/007615 and WO 2006/061249. These binder compositions are water soluble and exhibit excellent binding properties in terms of curing speed and curing density. Still, depending on the field of application, properties such as curing speed, water resistance, moisture uptake, dry strength and wet strength of the bonded products, need to be further improved and continue to attract attention.

### Summary of the Invention

Accordingly, it was an object of the present invention to provide an aqueous binder composition which is particularly suitable for bonding mineral fibres, which exhibits excellent binding characteristics in terms of curing speed and strength, has good water solubility and dilutability and is capable of providing bonded products having improved water resistance and reduced moisture uptake.

A further object of the present invention was to provide a mineral fibre product bonded with the cured binder composition and exhibiting improved application properties.

In accordance with a first aspect of the present invention, there is provided an aqueous binder composition comprising a water-soluble binder component obtained by reacting a dendritic compound with
(A) a polyhydroxy compound and/or an alkanolamine and/or a polyamine; and
(B) a polycarboxylic acid and/or a carboxylic acid anhydride
and
optionally, treating the reaction product with a base.

In accordance with a second aspect of the present invention, there is provided an aqueous binder composition comprising:
(i) a water-soluble binder component obtained by reacting
   (A) a polyhydroxy compound and/or an alkanolamine and/or a polyamine; and
   (B) a polycarboxylic acid and/or a carboxylic acid anhydride and optionally, treating the reaction product with a base; and
(ii) a dendritic compound.

In accordance with a further aspect of the present invention, there is provided a method of producing a bonded mineral fibre product which comprises the steps of contacting the mineral fibres or mineral fibre product with an aqueous binder composition as defined above, and curing the binder composition.

In accordance with another aspect of the present invention, there is provided a mineral fibre product comprising mineral fibres in contact with the cured binder composition defined above.

Bonded products produced from the aqueous binder composition according to the present invention exhibit improved application properties and, in particular, improved water resistance, moisture uptake, dry strength and wet strength.

### Description of the Preferred Embodiments

The aqueous binder composition according to the present invention comprises a water-soluble binder component obtained by reacting a dendritic compound with
(A) a polyhydroxy compound and/or an alkanolamine and/or a polyamine; and
(B) a polycarboxylic acid and/or a carboxylic acid anhydride and, optionally, treating the reaction product with a base.

Alternatively, the aqueous binder composition comprises:
(i) a water-soluble binder component obtained by reacting
   (A) a polyhydroxy compound and/or an alkanolamine and/or a polyamine; and
   (B) a polycarboxylic acid and/or a carboxylic acid anhydride and optionally, treating the reaction product with a base; and
(ii) a dendritic compound.

### Water-soluble Binder Component

The aqueous binder composition according to the present invention comprises the water-soluble reaction product of a dendritic compound with other binder-forming compounds or else, the aqueous binder composition comprises these other binder-forming compounds and/or a reaction product thereof together with a dendritic compound which will react with the other components upon curing of the binder composition.

### Dendritic compound

Dendritic macromolecules were first described by D.A. Tomalia et al. in Polymer Journal, Vol. 17, No. 1, 117-132 (1985). Meanwhile, they are recognized as one of the four major classes of polymeric architecture consisting of Class I (linear polymers); Class II (cross-linked polymers), Class III (branched polymers), and Class IV (dendritic polymers).

Dendritic macromolecules are often subdivided in four subsets, namely (1) random hyperbranched polymers, (2) dendrigraft polymers, (3) dendrons, and (4) dendrimers. See D.A. Tomalia et al. in Journal of Polymer Science, Part A: Polymer Chemistry, Vol. 40, 2719-2728 (2002).

Specific examples of dendritic compounds suitable for use in accordance with the present invention are dendritic polyester polyols, polyamidoamine dendrimers, polypropyleneimine dendrimers, polylysine dendrimers, hyperbranched polyglycerol, hyperbranched polyethyleneimine, hyperbranched polyamides and hyperbranched polyester amides. These are described, for instance, in EP-A-630389, EP-A-1424362 and US-A-2007/298006, as well as in the above-referenced articles by Tomalia et al. and the references cited therein. All this literature is incorporated herein by reference.

A particularly useful group of dendritic compounds are the dendritic polyester polyols which are commercially available under the trademark Boltorn® from Perstorp AB, SE-28480 Perstorp, Sweden. These dendritic polyester polyols are characterized by a densely branched backbone and a large number of reactive functional groups (OH groups). The dendritic structures are formed by polymerisation of specific polyalcohol cores and hydroxy acids such as, e.g., 2,2-dimethylol propionic acid. The dendritic compounds obtained are hydroxy-functional dendritic polyesters which are fully aliphatic and consist only of tertiary ester bonds. Their extensive branching provides high reactivity, lowers viscosity and results in balanced mechanical properties in addition to excellent thermal and chemical resistance.

Boltorn® H30, for example, has 32 terminal hydroxy groups and a nominal molecular weight of 3,600 g/mol:

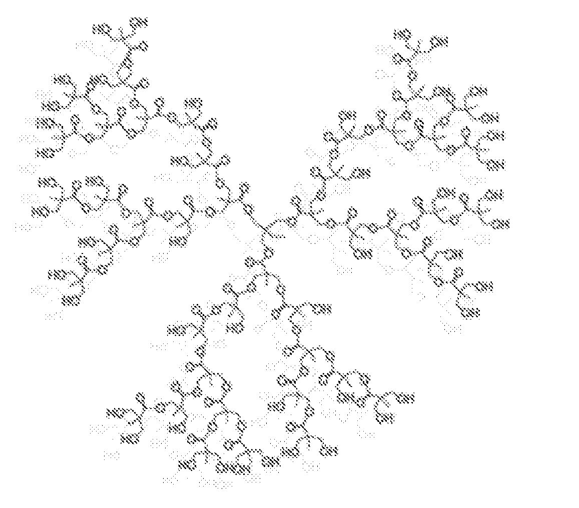

Another group of commercially available hydroxy-functional dendritic compounds (dendrimers) based on 2,2-dimethylol propionic acid are the products of the Polymer Factory Sweden AB, SE-13146 Nacka, Sweden, such as PFD-G2-TMP-OH, PFD-G3-TMP-OH, PFD-G4-TMP-OH and PFD-G5-TMP-OH.

Other commercially available dentritic compounds are the amine surface functional PAMAM dendrimers of Dendritech, Inc., Midland, Michigan, U.S.A., such as:

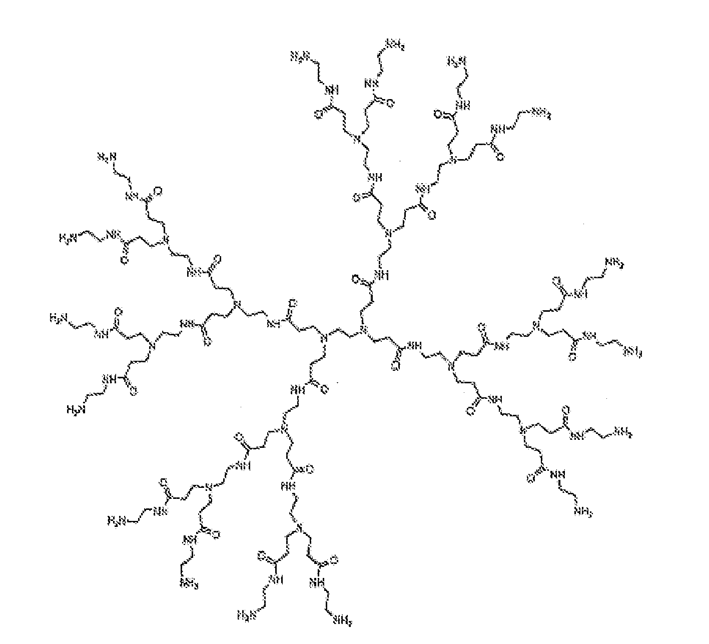

The dendritic compound generally has a weight average molecular weight Mw of between about 400 and about 10.000, preferably between about 700 to about 7.000.

The functional groups of the dendritic compound are normally selected from hydroxy, thio, carboxy, ester, amine, amide, imide, epoxy, nitrile and isocyanate groups. Preferably, the dendritic compound has terminal functional groups selected from hydroxy, thio, carboxy, amine, epoxy, nitrile and isocyanate groups, hydroxy groups being particulary preferred. Preferably, the dendritic compound has 4 to about 100 terminal functional groups. "Terminal" is herein intended to describe groups at the outside of the "tree structure" of the dendritic compound, not groups at branches which end inside the "tree structure" of the dendritic compound.

### Other binder-forming compounds

In accordance with the present invention, the other binder-forming compounds are generally selected from
(A) polyhydroxy compounds and/or alkanolamines and/or polyamines; and
(B) polycarboxylic acids and/or a carboxylic acid anhydrides.

In the following, specific types of preferred water-soluble binder components are described in more detail.

### Binder component 1

In a preferred embodiment, a water-soluble binder component 1 is obtained by reacting
(A) a polyhydroxy compound and
(B) a polycarboxylic acid.

Water-soluble binder components of that type and methods for their production are, for instance, disclosed in EP-A-1741726, the entire contents of which is incorporated herein by reference.

Binder component 1 is obtained from one or more polycarboxylic acid (i). The polycarboxylic acid must be sufficiently nonvolatile that it will substantially remain available for reaction with the polyol in the composition during heating and curing operations. The polycarboxylic acid may be one or more polymeric polycarboxylic acid, one or more low molecular weight polycarboxylic acid, or mixtures thereof.

Low molecular weight polycarboxylic acids may be compounds having a molecular weight less than about 1000 bearing at least two carboxylic acid groups, anhydride groups, or salts thereof, such as, polybasic carboxylic acids and anhydrides, or their salts. Exemplary polybasic acids and anhydrides may include, citric acid, butane tricarboxylic acid, maleic acid, maleic anhydride, fumaric acid, succinic acid, succinic anhydride, sebacic acid, azelaic acid, adipic acid, glutaric acid, tartaric acid, itaconic acid, trimellitic acid, hemimellitic acid, trimesic acid, tricarballylic acid, cyclobutane tetracarboxylic acid, 1,2,3,4-butanetetracarboxylic acid, pyromellitic acid, oligomers of carboxylic acid, and the like, and salts thereof. Optionally, the low molecular weight polybasic carboxylic acid, anhydride or salt thereof may be mixed with the hydroxyl-containing compound, under reactive conditions, prior to mixing with one or more polymeric polycarboxylic acid.

The one or more polymeric polycarboxylic acid may be chosen from, for example, polyesters containing at least two carboxylic acid groups, addition (co)polymers or oligomers containing at least two copolymerized carboxylic acid-functional monomers and oligomers of polybasic acids or their salts or anyhydrides. Preferably, the one or more polymeric polycarboxylic acid is chosen from addition (co)polymers formed from at least one ethylenically unsaturated monomer, most preferably polymers and copolymers of (meth)acrylic acid. The addition (co)polymers may be in the form of solutions of the addition (co)polymer in an aqueous medium such as, for example, an alkali-soluble resin which has been solubilized in a basic medium; in the form of aqueous dispersions such as, for example, an emulsion-polymerized dispersion; or in the form of aqueous suspensions.

Suitable addition (co)polymers contain at least two carboxylic acid groups, anhydride groups, or salts thereof formed from the addition polymerization of one or more ethylenically unsaturated carboxylic acids, anhydrides and salts thereof and, optionally, one or more comonomers. Ethylenically unsaturated carboxylic acids or anhydrides may include, for example, methacrylic acid, acrylic acid, crotonic acid, fumaric acid, maleic acid, 2-methyl maleic acid, itaconic acid, citraconic acid, mesaconic acid, cyclohexenedicarboxylic acid, 2-methyl itaconic acid, .alpha.-methylene glutaric acid, monoalkyl maleates, and monoalkyl fumarates, and salts thereof; ethylenically unsaturated anhydrides, such as, for example, maleic anhydride, itaconic anhydride, acrylic anhydride, and methacrylic anhydride, and salts thereof. Preferred monomers may include carboxylic acid groups, anhydride groups, or salts are (meth)acrylic acid and maleic acid, and salts thereof, and maleic anhydride. The monomers including carboxylic acid groups, anhydride groups, or salts are used at a level of from 1 wt. % or more, based on the weight of the polymer, or 10 wt. % or more, or, 25 wt. % or more, preferably 30 wt. % or more, or, more preferably 75 wt. % or more, or, even more preferably 85 wt. % or more, and up to 100 wt. %, for example, up to 99 wt. %, or up to 90 wt. %. Suitable ethylenically unsaturated comonomers may include one or more acrylic ester monomers including methyl acrylate, ethyl acrylate, butyl acrylate, 2-ethylhexyl acrylate, decyl acrylate, methyl methacrylate, butyl methacrylate, isodecyl methacrylate: Hydroxyl group containing monomers, such as hydroxyethyl acrylate, hydroxyethyl methacrylate, hydroxypropyl methacrylate and allyloxy functional hydroxyl group-containing monomers; acrylamide or substituted acrylamides, such as t-butylacrylamide; styrene or substituted styrenes; butadiene; vinyl acetate or other vinyl esters; acrylonitrile or methacrylonitrile; and the like. Preferable comonomers include one or more ethylenically unsaturated monomer having a solubility of less than 2 g/100 g of water at 25°C, one or more allyloxy functional hydroxyl group-containing monomers; one or more phosphorous-containing comonomers, such as vinyl phosphonic acid, phosphoalkyl (meth)acrylates, or salts thereof; or one or more strong acid functional monomers, such as vinyl sulfonic acid monomers, and their salts; or mixtures of any of such comonomers.

The one or more preferred addition comonomers having a solubility of less than 2 g/100 g of water at 25°C may be chosen from ethyl (meth)acrylate, methyl methacrylate, butyl (meth)acrylate, styrene, mono-alkyl (meth)acrylamide, di-alkyl (meth)acrylamide and t-alkyl neopentyl alkyl acrylamides. Such comonomers may be included in the addition monomer mixture in the amount of 3 or more wt. %, or 10 or more wt. %, and as much as 25 wt. % or less, or 20 wt. % or less, or 15 wt. % or less, based on the total weight of monomers used to make the addition copolymer.

The one or more preferred allyloxy functional hydroxyl group-containing monomers may be chosen from hydroxyl group-including monomers of Formula I,

CH2=C(R1)CH(R2)OR3 (I)

wherein R1 and R2 are independently selected from hydrogen, methyl, and -CH2OH; and R3 is selected from hydrogen, -CH2CH(CH3)OH, -CH2CH2OH, C(CH2OH)2-C2H5, and (C3-C12) polyol residues; or of Formula II, 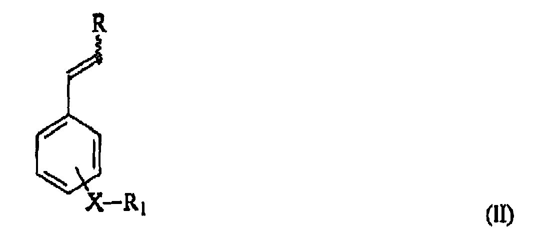 wherein R is selected from CH3, Cl, Br, and C6H5; and R1 is selected from H, OH, CH2OH, CH(CH3)OH, glycidyl, CH(OH)CH2OH, and (C3-C12)polyol residues. Such allyloxy functional hydroxyl-group containing monomers may be included in the addition monomer mixture at a level of up to 99 wt. %, or up to 70 wt. %, preferably, up to 30 wt. %, based on the total weight of the monomer mixture, and can be used in amounts of 1 wt. % or more, or 10 wt. % or more, based on the total weight of the monomer mixture. Monomers of Formula I and Formula II can be prepared by a variety of synthetic routes known to those skilled the art. For example, allyl chloride can be reacted with various polyhydroxy compounds to give, for example, the corresponding allyloxy derivatives of sugars, glycerine, trimethylolpropane (TMP) and pentaerythritol. Vinyl glycols may be prepared by methods such as those described in US-A-5336815. Allyloxy compounds that would hydrolyze to allyloxy compounds of Formula I under the conditions of aqueous polymerization, for example allyl glycidylether, are also useful as monomers.

The (C3-C12)-containing polyols useful to prepare allyloxy compounds of Formula I include, for example, (C3-C6)-polyhydroxy compounds such as erythritol, pentaerythritol and glycerine; sugar alcohols such as xylitol, sorbitol and mannitol; and, polyhydroxy aldehyde and ketone sugars such as glucose, fructose, galactose, maltose, sucrose, lactose, erythrose and threose. Examples of suitable unsaturated non-ionizable monomers of Formula (II) include allyl alcohol, methallyl alcohol, allyloxyethanol, allyloxypropanol, 3-allyloxy-1,2-propanediol, trimethylolpropane allyl ether, allyloxy(sugars), such as allyloxy(glucose), allyloxy(fructose) and allyloxy(mannose), erythritol monoallyl ether, pentaerythritol monoallyl ether, and 1-butene-3,4-diol. The most preferred monomers of Formula I and Formula II are allyl alcohol and 3-allyloxy-1,2-propanediol.

The one or more polycarboxylic acid addition (co)polymers may suitably have a weight average molecular weight of 1000 or more, and the molecular weight may range as high as to 10,000,000 or, preferably, as high as 250,000, or, more preferably, as high as 100,000, yet even more preferably, as high as 10,000, yet even still more preferably, as high as 5,000. Higher molecular weight alkali-soluble resins can lead to curable compositions which exhibit excessive viscosity. Accordingly, when the addition polymer is an alkali-soluble resin which comprises the reaction product of one or more carboxylic acid, anhydride, or salt thereof, in the amount of from 5 wt. % or more, for example 30 wt. %, based on the total weight of the monomers used to make the addition polymer, a molecular weight from 500 to 20,000 is preferred.

In another embodiment, the polycarboxylic acid addition (co)polymers may be oligomers or co-oligomers of ethylenically-unsaturated carboxylic acids prepared by free radical addition polymerization, having a number average molecular weight of between 300 and 900.

To improve solubility in aqueous media, the carboxylic acid groups, anhydride groups, or salts thereof of the one or more addition (co)polymer may be neutralized with one or more fixed or volatile base. Preferably, the carboxylic acid groups, anhydride groups, or salts of the addition (co)polymer may be neutralized with a volatile base. By "volatile base" is meant herein one or more base which is substantially volatile under the conditions of treatment of the substrate with the curable composition. By "fixed" base is meant herein, a base which is substantially non-volatile under the conditions of treatment of the substrate with the curable composition.

Use of volatile bases permits curing of the binder composition without a strong acid catalyst, where such curing is possible. Suitable volatile bases include, for example, ammonia or volatile lower alkyl amines. Suitable fixed bases include, for example, sodium hydroxide, potassium hydroxide, sodium carbonate, and t-butylammonium hydroxide. The fixed base is sufficiently nonvolatile that it will substantially remain in the curable composition during heating and curing operation. The volatile base can be used in addition to the fixed base. Fixed multivalent bases such as, for example, calcium carbonate, may tend to destabilize aqueous dispersions if the copolymer component is used in the form of an aqueous dispersion, however, they can be used in minor amounts.

The amount of one or more base utilized may be such that the carboxylic acid groups, anhydride groups, or salts thereof of the addition (co)polymer are neutralized to an extent of less than 35%, or less than 20%, or less than 5%, calculated on an equivalents basis. It is preferred not to use any neutralizing base.

The one or more polyol (ii) used in the preparation of binder component 1 preferably contains three or more hydroxyl groups, i.e. is a trihydric polyol; however it may contain two hydroxyl groups. The polyol must be sufficiently nonvolatile that it will substantially remain available for reaction with the polycarboxylic acid in the composition during heating and curing operations. The polyol may be one or more compound having a formula molecular weight of less than about 1000 bearing at least two hydroxyl groups chosen from, for example, (poly)ethylene glycol, diethanolamine (DEOA), glycollated ureas, 1,4-cyclohexane diol, resorcinol, catechol, and C.sub.3 to C.sub.8 (poly)alkylene glycols; one or more trihydric polyols which contain three or more hydroxyl groups, such as glycerol, trimethanol propane (TMP), trimethanolethane, pentaerythritol, sorbitol, triethanolamine (TEOA), 1,2,4-butanetriol, poly(vinyl alcohol), partially hydrolyzed poly(vinylacetate), sorbitol, sucrose, glucose, pyrogallol, propoxylated trimethylol propane, propoxylated pentaerythritol, β-hydroxyamides of the following Formula III 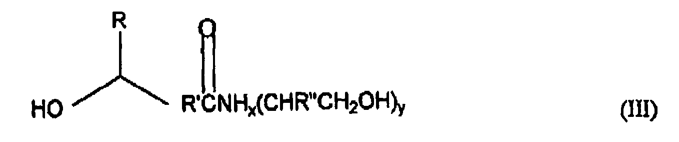 in which formula, R and R" independently represent H, or monovalent C1 to C18 linear or branched alkyl radicals which may contain aryl, cycloalkyl and alkenyl groups; R' represents a divalent C1 to C5 alkylene radical or a covalent bond; y is the integer 1, 2, or 3; x is 1 or 2, such that (x+y)=2 or 3; and mixtures thereof. Other suitable trihydric polyols having at least three hydroxyl groups may comprise reactive polyols such as, for example, β-hydroxyalkylamides such as, for example, bis-[N,N-di(β-hydroxyethyl)]adipamide, as may be prepared according to the teachings of US-A- 4076917; addition (co)polymers containing at least two hydroxyl groups such as, for example, polyvinyl alcohol, partially hydrolyzed polyvinyl acetate, and addition homopolymers or copolymers comprising the polymerization product of hydroxyl group containing monomers; or mixtures and combinations thereof. Further, the polyol may comprise the one or more polymeric polycarboxylic acid of the present invention, wherein the polymeric polycarboxylic acid comprises the polymerization product of one or more ethylenically unsaturated carboxylic acids and one or more hydroxyl group containing monomers, such as the monomers of formula I or II, above. Preferably, the one or more polyol comprises a trihydric polyol or a dihydric polyol of formula III. Preferred trihydric alcohols are glycerol, TEOA, TMP, trihydric β-hydroxyamides of formula III, and mixtures thereof.

When reacting a dendritic compound with binder component 1 in order to form a water-soluble binder component in accordance with the first aspect of the invention, the polyhydroxy compound and the polycarboxylic acid are preferably used in proportions such that the ratio of equivalents of amine groups from the dendritic compound plus hydroxy groups (NH+OH) to equivalents of carboxy groups (COOH) in the binder component is within the range of about 0.4 to 2.0, the dendritic compound being used in an amount such that the equivalent ratio of NH+OH groups derived from the dendritic compound to total NH+OH groups is from 0.01 to 0.5.

### Binder component 2

In another preferred embodiment, a water-soluble binder component 2 is obtained by reacting
(A) a polyamine and
(B) a polycarboxylic acid.

Water-soluble binder components of that type and methods for their production are, for instance, disclosed in US A-2007/0173588, the entire contents of which is incorporated herein by reference.

In binder component 2, the polycarboxylic acid has a functionality, expressed by the number of carboxylic groups that can react with the polyamine, equal to or greater than 2, preferably less than 5000, advantageously less than 2000 or even less than 500.

Preferably, the molecular mass of the polycarboxylic acid ranges from 50 to 10⁵ g/mol and preferably is less than 10⁴ g/mol. By keeping the molecular mass within the limits indicated, it is possible for the stiffness of the final crosslinked product not to be excessively high.

As examples of polycarboxylic acids of low molecular mass, mentioned may be made of carboxylic acids of functionality equal to 2, such as succinic acid, glutaric acid, adipic acid, azelaic acid, sebacic acid, tartaric acid, phthalic acid and tetrahydrophthalic acid, carboxylic acids of functionality equal to 3, such as citric and trimellitic acid, and carboxylic acids of functionality equal to 4, such as 1,2,3,4-butanetetracarboxylic acid (BTCA).

The polycarboxylic acids of higher molecular mass may especially be chosen from oligomers and polymers that are obtained by homopolymerization of unsaturated acids, such as acrylic acid, methacrylic acid, crotonic acid, isocrotonic acid, maleic acid, cinnamic acid, 2-methylmaleic acid, itaconic acid, 2-methylitaconic acid and α,β-methyleneglutaric acid. The polycarboxylic acid may also be obtained by copolymerization of one or more of the aforementioned monomers with one or more other, hydrophilic and/or hydrophobic, unsaturated monomers for example selected from olefins, such as ethylene, propylene, butylene, isobutylene and styrene and its derivates, and macromonomers (oligomers containing one or more reactive unsaturated functional groups) having terminal unsaturation.

The aforementioned polycarboxylic acids, that are in the form of monomer, oligomer or polymer, may be obtained in a known manner from the aforementioned acids or from the corresponding anhydrides when they exist. As examples, mention may be made of succinic anhydride, glutaric anhydride, phthalic anhydride, tetrahydrophthalic anhydride, trimellitic anhydride, maleic anhydride and methacrylic anhydride.

Preferably, the polycarboxylic acid is chosen from citric or tartaric acid, 1,2,3,4-butanetetracarboxylic acid (BTCA), polyacrylics such as poly(acrylic acid), ethylene/acrylic acid copolymers and acrylic acid/maleic acid copolymers. It is more particularly preferable to choose tartaric acid, BTCA, polyacrylic acids and acrylic acid/maleic acid copolymers.

The polyamine has a functionality, expressed by the number of amine functional groups, which is equal to or greater than 2, preferably less than 200. Advantageously, these functional groups are primary and/or secondary amine functional groups.

The polyamine may be chosen from a wide range of polyamines, for example aliphatic polyamines having a saturated or unsaturated, linear, branched or cyclic chain, possibly containing one or more heteroatoms, especially N and/or O, and aromatic polyamines. As examples, mention may be made of 1,3-bis(aminomethyl)cyclohexane and m-xylene-α,α'-diamine.

Preferably, the polyamine has a molecular mass of less than 1000 g/mol and better still less than 500 g/mol.

Polyamines having the following formula IV are particularly beneficial: 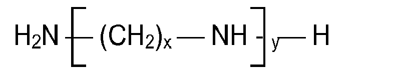 in which x varies from 2 to 10, preferably 2 to 4, and y varies from 1 to 10.

Advantageously, diethylenetriamine (DETA), triethylenetetramine (TETA) and tetraethylenepentamine (TEPA) are used.

Among polyamines of higher molecular mass, mention may be made of polyethyleneimines, polyaminostyrenes, and products resulting from the degradation of chitin in basic medium (chitosans).

Certain polyamines may prove to be very sparingly soluble in water. To avoid having to use the polyamine in the form of a highly dilute solution and therefore of having to handle and store large quantities of water, it is advantageous to convert it, at least partly, into a more soluble salt. To do this, the polyamine is dissolved in water containing an organic or mineral acid, for example, sulphamic acid or hydrochloric acid.

The amount of acid to be used depends on the solubility of the polyamine and on the nature of the salt to be formed. In general, it is necessary to obtain a solution containing 1 to 10 molar equivalents, preferably around 1 molar equivalent, of amide salt and 1 to 10 molar equivalents, preferably around 5 molar equivalents, of polyamine.

### Binder component 3

In still another preferred embodiment, a water-soluble binder component 3 is obtained by reacting
(A) an alkanolamine and
(B) a carboxylic acid anhydride.

Preferred alkanolamines for use in the preparation of this binder system are alkanolamines having at least two hydroxy groups such as, for instance, alkanolamines represented by the formula V 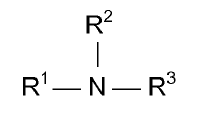 wherein R¹ is hydrogen, a C₁₋₁₀ alkyl group or a C₁₋₁₀ hydroxyalkyl group; and R² and R³ are C₁₋₁₀ hydroxyalkyl groups.

Preferably, R² and R³, independently are C₂₋₅ hydroxyalkyl groups, and R¹ is hydrogen, a C₁₋₅ alkyl group or a C₂₋₅ hydroxyalkyl group. Particularly preferred hydroxyalkyl groups are β-hydroxyalkyl groups.

Specific examples of suitable alkanolamines are diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, 3-amino-1,2-propanediol, 2-amino-1,3-propanediol, aminoethylethanolamine and tris(hydroxymethyl)aminomethane. Diethanolamine is the currently preferred alkanolamine.

The carboxylic anhydride reactant may be selected from saturated or unsaturated aliphatic and cycloaliphatic anhydrides, aromatic anhydrides and mixtures thereof, saturated or unsaturated cycloaliphatic anhydrides, aromatic anhydrides and mixtures thereof being preferred. In a particularly preferred embodiment of the invention, two different anhydrides selected from cycloaliphatic and/or aromatic anhydrides are employed. These different anhydrides are preferably reacted in sequence.

Specific examples of suitable aliphatic carboxylic anhydrides are succinic anhydride, maleic anhydride and glutaric anhydride. Specific examples of suitable cycloaliphatic anhydrides are tetrahydrophthalic anhydride, hexahydrophthalic anhydride, methyltetrahydrophthalic anhydride and nadic anhydride, i.e. endo-cis-bicyclo[2.2.1]-5-heptene-2,3-dicarboxylic anhydride. Specific examples of suitable aromatic anhydrides are phthalic anhydride, methylphthalic anhydride, trimellitic anhydride and pyromellitic dianhydride.

If two different anhydrides are employed, a combination of cycloaliphatic anhydride and aromatic anhydride is particularly preferred, e.g. a combination of tetrahydrophthalic anhydride (THPA) and trimellitic anhydride (TMA). The molar ratio of cycloaliphatic anhydride to aromatic anhydride is preferably within the range of from 0.1 to 10, more preferably within the range of from 0.5 to 3.

In the preparation of the binder composition, the proportion of the alkanolamine and carboxylic anhydride reactants is preferably selected such that the ratio of equivalents of active hydrogens from amine and hydroxy groups (NH+OH) to equivalents of carboxy groups (COOH) is at least 0.4, more preferably at least 0.6. By employing these minimum ratios, a too high excess of free unreacted acid is avoided which under specific conditions could lead to a displacement of binder in the curing oven, i.e. to a non-uniform distribution in amount of binder between the bottom and top of the mineral wool mat or web. Furthermore, high amounts of unreacted acid may increase corrosiveness.

On the other hand, the properties of the final binder composition, such as curing behaviour, durability and humidity resistance are determined by the ratio of reactive groups present. Therefore, for optimum performance, the ratio of equivalents of active hydrogens from amine and hydroxy groups (NH+OH) to equivalents of carboxy groups (COOH) in the final binder composition is preferably adjusted to 2.0 or less, more preferably to 1.7 or less. Preferably, the final binder composition has an equivalent ratio of (NH+OH) / (COOH) within the range of from 0.7 to 1.55.

The reaction between the alkanolamine and carboxylic anhydride reactants is carried out in the usual manner, for instance, as described in WO 99/36368, WO 01/05725, WO 01/96460, WO 02/06178, WO 2004/007615 and WO 2006/061249, the entire contents of which is incorporated herein by reference.

The reaction temperature is generally within the range of from 50°C to 200°C. In a preferred embodiment and, in particular, when two different anhydrides are employed, the alkanolamine is first heated to a temperature of at least about 40°C, preferably at least about 60°C, whereupon the first anhydride is added and the reaction temperature is raised to at least about 70°C, preferably at least about 95°C and more preferably at least about 125°C, at which temperature the second anhydride is added to the reaction mixture when substantially all the first anhydride has dissolved and/or reacted. Increasing the reaction temperature from 70-95°C to 100-200°C allows a higher conversion of monomers to oligomers. In this case, a preferred temperature range is 105-170°C, more preferably 110-150°C.

If water is added after the first anhydride has reacted, either together with the second anhydride or before addition of the second anhydride or at the end of the reaction, in an amount to make the binder easily pumpable, a binder having an increased molecular weight (compared to water addition from the start) is obtained which still has a desired pumpability, viscosity, and water dilutability and contains less unreacted monomers.

If appropriate, an additional acid monomer may be employed in the reaction and is preferably added to the reaction mixture before addition of the anhydride reactant. Specific examples of suitable acid monomers are di-, tri- and polycarboxylic acids such as adipic acid, citric acid, sebacic acid, azelaic acid, succinic acid, tartaric acid, trimellitic acid, pyromellitic acid and styrene-maleic acid oligomers or polymers. Furthermore, one or more polycarboxy crosslinking agents may be added after termination of the reaction and, optionally, together with the base. Suitable polycarboxy crosslinking agents are, e.g., homopolymers and copolymers of acidic monomers such as acrylic acid, alkylacrylic acid (e.g. methacrylic acid) and maleic acid, and copolymers of such acidic monomers and acrylates. The weight percentage of these polycarboxy crosslinking agents is at least 0.5, preferably at least 10 wt.%, and up to 50, preferably up to 30 wt.%, more preferably up to 15 wt.%, based on the binder composition.

When reacting a dendritic compound with this type of binder in order to form a water-soluble binder component in accordance with the first aspect of the invention, the dendritic compound may be added at the beginning or during the reaction, before or after adding water. Preferably, the alkanolamine and the carboxylic acid anhydride are used in proportions such that the ratio of equivalents of total active hydrogens from amino groups and hydroxy groups (NH+OH) to equivalents of total carboxy groups (COOH) in the binder component is within the range of about 0.4 to 2.0, the dendritic compound being used in an amount such that the equivalent ratio of NH+OH groups derived from the dendritic compound to total NH+OH groups or the equivalent ratio of COOH groups derived from the dendritic compound to total COOH groups is from 0.01 to 0.9.

Furthermore, the dendritic compound is preferably used in an amount such that the equivalent ratio of NH+OH groups derived from the dendritic compound to total NH+OH groups or the equivalent ratio of COOH groups derived from the dendritic compound to total COOH groups is from 0.05 to 0.5, preferably from 0.1 to 0.3.

On the other hand, if the dentritic compound is used as a component of the aqueous binder composition in accordance with the second aspect of the present invention, the water-soluble binder component is preferably prepared using the alkanolamine and the carboxylic acid anhydride in proportions such that the ratio of equivalents of total active hydrogens from amino groups and hydroxy groups (NH+OH) to equivalents of total carboxy groups (COOH) in the binder component is within the range of about 0.4 to 2.0.

Furthermore, in this case, the dendritic compound is present in the aqueous binder composition in an amount such that the equivalent ratio of NH+OH groups derived from the dendritic compound to total NH+OH groups or the equivalent ratio of COOH groups derived from the dendritic compound to total COOH groups is preferably from 0.01 to 0.5, more preferably from 0.05 to 0.3, and most preferably from 0.1 to 0.2.

In both embodiments according to the first and second aspect of the present invention, the ratio of equivalents of total active hydrogens from amino groups and hydroxy groups (NH+OH) to equivalents of total carboxy groups (COOH) in the binder component is within the range of about 0.6 to 1.7, preferably 0.9 to 1.55.

In binder component 3, part of the alkanolamine may be replaced by an amine, preferably a polyamine. The polyamine has a functionality, expressed by the number of amine functional groups, which is equal to or greater than 2, preferably less than 200. Advantageously, these functional groups are primary and/or secondary amine functional groups.

The polyamine may be chosen from a wide range of polyamines, for example aliphatic polyamines having a saturated or unsaturated, linear, branched or cyclic chain, possibly containing one or more heteroatoms, especially N and/or O, and aromatic polyamines. As examples, mention may be made of 1,3-bis(aminomethyl)cyclohexane and m-xylene-α,α'-diamine.

Preferably, the polyamine has a molecular mass of less than 1000 g/mol and better still less than 500 g/mol.

Polyamines having the following formula IV are particularly beneficial:

H₂N⁅(CH₂)ₓ-NH⁆_{y}-H

in which x varies from 2 to 10, preferably 2 to 4, and y varies from 1 to 10.

Advantageously, polyalkylene polyamines like diethylenetriamine (DETA), triethylenetetraamine (TETA) and tetraethylene pentaamine (TEPA) may be used.

Among polyamines of higher molecular mass, mention may be made of methylene-bis-aniline, xylene diamine, bis(aminomethyl)-cyclohexane, 1,3-cyclohexanediethaneamine, 2,4-diamino-6-hydroxypyrimidine and 4,4-diaminodiphenylmethane.

In this embodiment, preferably up to 90%, more preferably up to 50%, and most preferably up to 25% of active functional groups are amino groups.

It is also within the scope of the present invention to replace part of the alkanolamine by a polyol such as, e.g., glycerol or a polyalkylene glycol like polyethylene glycol (PEG), polypropylene glycol (PPG), polybutylene glycol (PBG) or copolymers and derivatives thereof.

### Treatment with a base

In order to improve the water solubility and dilutability of the binder, a base may be added up to a pH of about 8, preferably a pH of between about 5-8, and more preferably a pH of about 6. Furthermore, the addition of a base will cause at least partial neutralization of unreacted acids and a concomitant reduction of corrosiveness. Normally, the base will be added in an amount sufficient to achieve the desired water solubility or dilutability. The base is preferably selected from volatile bases which will evaporate at or below curing temperature and hence will not influence curing. Specific examples of suitable bases are ammonia (NH₃) and organic amines such as diethanolamine (DEA), triethanolamine (TEA) and dimethylethanolamine (DMEA).

### Additives

The binder composition according to the present invention may additionally comprise one or more conventional binder additives. These include, for instance, curing accelerators such as, e.g., β-hydroxyalkylamides; the free acid and salt forms of phosphoric acid, hypophosphorous acid, phosphonic acid, citric acid and adipic acid. Other strong acids such as boric acid, sulphuric acid, nitric acid and p-toluenesulphonic acid may also be used, either alone or in combination with the just mentioned acids, in particular with phosphoric, hypophosphorous acid or phosphonic acid.

Other suitable binder additives are silane coupling agents such as γ-aminopropyltriethoxysilane; thermal stabilizers; UV stabilizers; emulsifiers; surface active agents, particularly nonionic surfactants; biocides; plasticizers; anti-migration aids; coalescents; fillers and extenders such as carbohydrates, clay, silicates and magnesium hydroxide; pigments such as titanium dioxide; hydrophobizing agents such as fluorinated compounds, mineral oils, natural oils and silicone oils; flame retardants; corrosion inhibitors such as thiourea; urea; antifoaming agents; antioxidants; and others.

These binder additives and adjuvants may be used in conventional amounts generally not exceeding 20 wt.% of the binder solids. The amount of curing accelerator in the binder composition is generally between 0.05 and 5 wt.%, based on solids.

### Final Binder Composition

The aqueous binder composition preferably has a solids content of from 1 to 20 wt.%. In order to achieve adequate application properties and, in particular, spraying properties, the viscosity of the binder composition may be adjusted. This is accomplished, for instance, by controlling the type and/or concentration of binder components in the aqueous binder system or by dispersing or emulsifying the binder in water.

The binder composition is normally applied in an amount of 0.1 to 10 %, preferably 0.2 to 8 % by weight, of the bonded mineral fibre product on a dry basis.

### Mineral fibre product

The formaldehyde-free aqueous binder composition according to the present invention may be applied to mineral fibres or mineral fibre products by conventional techniques such as, e.g., air or airless spraying, rotating disc atomization, padding, saturating, roll coating, curtain coating, beater deposition, or the like.

The mineral fibres used may be any of man-made vitreous fibres (MMVF), glass fibres, ceramic fibres, basalt fibres, slag wool, rock wool, stone wool and others. The mineral fibre products are, for instance, woven and nonwoven fabrics, mats, batts, slabs, sheets, plates, strips, rolls, granulates and other shaped articles which find use, for example, as thermal or acoustical insulation materials, vibration damping, construction materials, facade insulation, reinforcing materials for roofing or flooring applications, as filter stock, as horticultural growing media and in other applications.

For the manufacture of conventional thermal or acoustical insulation products, the binder is normally applied in an amount of 0.1 to 15 %, preferably 0.3-10 %, of the bonded mineral fibre product.

In general, the binder composition is applied, normally by spraying, immediately after fiberization of the mineral melt whereupon the coated mineral wool is cured in a curing oven wherein heated air is passed through the mineral wool web to cure the binder. Typically, the curing oven is operated at a temperature of from about 150°C to about 350°C. Preferably, the curing temperature ranges from about 200 to about 300°C. Generally, the curing oven residence time is from 30 seconds to 20 minutes, depending on, for instance, the product density.

Besides conventional curing by heat (e.g. heated air) other curing methods may be used, for example curing with microwave or infrared radiation. If desired, the mineral wool web may also be subjected to a shaping process before curing.

The bonded mineral fibre product emerging from the curing oven in the form of e.g. a batt may be cut to a desired format and, if appropriate, compressed for packaging and shipping. It may also be employed as an intermediate for the manufacture of shaped articles and composite materials.

Although the formaldehyde-free aqueous binder composition according to the present invention is particularly useful for bonding mineral fibres, it may equally be employed in other applications typical for binders and sizing agents, e.g. as a binder for foundry sand, chipboard, glass fibre tissue, cellulosic fibres, non-woven paper products, composites, moulded articles, coatings etc.

The following examples are intended to further illustrate the present invention without limiting it. Parts and percentages are by weight, unless indicated otherwise. In the examples, the following abbreviations are used:
- DEA:: diethanolamine
- PTA:: phthalic anhydride
- THPA:: tetrahydrophthalic anhydride
- TMA:: trimellitic anhydride

### Reference Example

### Preparation of standard resin without dendritic compound

105 g of DEA is charged into a 500 ml reactor equipped with stirrer, thermometer and feeding funnel, and is heated to 60°C. Then, a first portion of 61 g of THPA is added which results in a temperature increase to 105°C. After 20 min, the remaining 30 g of THPA is added into the flask. The temperature goes up to 130°C and stays at this level for 30 min, whereupon 58 g of TMA is added. The reaction mixture is kept at 130°C for 1 hour. Then, the reaction mixture is cooled to 90°C and 89 g of warm water is slowly added. After stirring for 1 hour, a binder component having an equivalent ratio of (NH+OH)/COOH of approx. 1.43 is obtained.

### Example 1

### Preparation of binder component containing Boltorn® H30

65 g of Boltorn® H30 and 140 g of DEA are added into a three-neck flask equipped with stirrer, thermometer, and feeding funnel. The flask is heated to 75°C for 30 min and Boltron® H30 is totally dissolved into DEA. Then, 92 g of THPA is added into the flask which results in a temperature increase to 105°C. After 30 min, the remaining 46 g of THPA is added into the flask. The temperature goes up to 130°C and stays at this level for 1 hour. All the THPA is dissolved. Next, 88 g of TMA is added into the flask. After stirring for 1 hour, a thick paste is obtained. Then, 237 g of warm water is slowly added into the flask, and the temperature is reduced to 80°C. After 40 min, a binder component having an equivalent ratio of (NH+OH)/COOH of approx. 1.43 is obtained.

### Example 2

### Preparation of binder component containing Boltorn® P500

23g of Boltorn® P500 and 154 g of DEA are added into a three-neck flask equipped with stirrer, thermometer, and feeding funnel. The flask is then heated to 75°C, and 92 g of THPA is added into the flask. The temperature automatically increases to 105°C. After 30 min reaction time, the remaining 46 g of THPA is added into the flask. The temperature goes up to 130°C and stays at this level for 1 hour. All THPA is dissolved. Then, 88 g of TMA is added into the flask. After stirring for 1 hour, 235 g of warm water is slowly added into the flask, and the temperature is decreased to 80°C. Finally, a binder component having an equivalent ratio of (NH+OH)/COOH of approx. 1.43 is obtained.

### Example 3

### Testing

The binders prepared in the preceding examples were tested for the strength according to the method described in Example 8 of WO99/36368. The test results are shown in Table 1.

**Table 1.**

| | Strength, N/mm² |
|---|---|
| Ref. Example | 6.53 |
| Example 1 | 6.66 |
| Example 2 | 7.23 |

### Example 4

### Testing

The water absorbance of the binder prepared in the preceding examples was determined employing the following method:

### Moisture uptake:

Approx. 0,8 g of binder solution having a solids content of about 25% is evenly spread over a quartz filter. The filter is placed in a flash curing apparatus and cured at 250°C or 275°C for 4 min at a differential pressure over the filter of 190 mm water column.

After curing, the filter is weighted and placed in a climate chamber of 95%RH at 70°C. The filter is weighted again after 3, 7 and 10 days in chamber. The moisture uptake value (%) can be calculated from above measurement. Normally, seven filters of each binder to be tested are prepared, and the average result for binder is determined and used as a measurement for the water absorbance of the cured binder. The less moisture uptake, the better the water resistance is.

The results from testing of the different binder resins are shown in Table 2.

**Table 2**

| | Moisture uptake (%) after | | |
|---|---|---|---|
| | 3 days | 7 days | 10 days |
| Ref. Example, 250°C | 5.04 | 11.23 | 11.29 |
| Example 1, 250°C | 5.25 | 7.03 | 7.55 |
| Example 2, 250°C | 4.94 | 7.66 | 8.36 |
| Ref. Example, 275°C | 4.97 | 8.00 | 9.41 |
| Example 1, 275°C | 2.62 | 3.75 | 3.55 |
| Example 2, 275°C | 4.80 | 6.32 | 7.38 |

### Example 5

### Preparation of binder having an equivalent ratio of (NH+OH)/COOH = 1.2

90 g of DEA is charged into a 500 ml reactor equipped with stirrer, thermometer and feeding funnel, and is heated to 60°C. Then, a first portion of 70 g of THPA is added. The temperature automatically increases to 105°C. After 20 min, the remaining 35 g of THPA is added. The temperature increases to 130°C and stays at this level for 30 min, whereupon 50 g of TMA is added. The reaction mixture is kept at 130°C for 1 hour. Then, the reaction mixture is cooled to 90°C and 86 g of warm water is slowly added. After stirring for 1 hour, a binder component having an equivalent ratio of (NH+OH)/COOH of approx. 1.2 is obtained.

### Example 6

### Preparation of binder component containing Boltorn® P500

A 20% solution of Boltorn® P500 is prepared by mixing 48 g of Boltorn® P500 with 192 g of water. The mixture is heated up to 90°C and stirred for at least 1 hour. After the mixture has cooled to room temperature, it is added into 303 g of a mixture obtained according to Example 5. A binder component having an equivalent ratio of (NH+OH)/COOH of approx. 1.43 is obtained.

### Example 7

### Production line test and results

A binder prepared in accordance with Example 6 was tested at production line.

The results obtained are shown in Table 3. The delamination strength was tested in accordance with Standard EN 1607. "Aged in autoclave" means 15 min at 100% RH, 1 ato and 121°C. The values for the 28 days aged strength and moisture resistance were obtained by ageing samples in a climate chamber for 28 days at >95% RH and 70°C. Moisture resistance is defined as the change in thickness of a test specimen caused by the influence of moisture and heat.

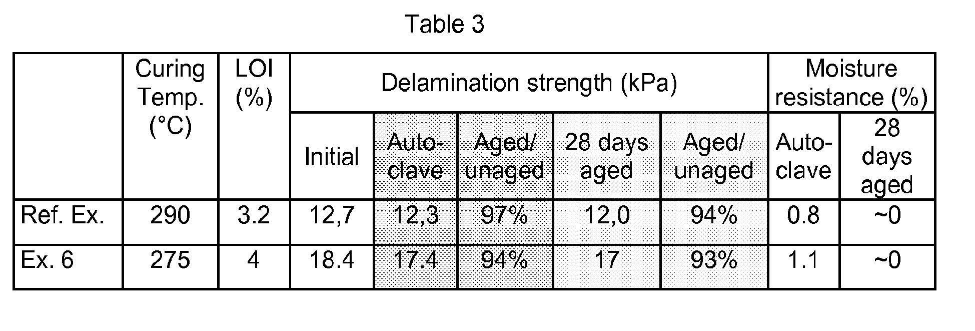

## Claims

1. An aqueous binder composition comprising a water-soluble binder component obtained by reacting a dendritic compound with
(A) a polyhydroxy compound and/or an alkanolamine and/or a polyamine;
and
(B) a polycarboxylic acid and/or a carboxylic acid anhydride
and
optionally, treating the reaction product with a base.

2. The binder composition of claim 1 wherein the water-soluble binder component is obtained by reacting a dendritic compound with
(A) a polyhydroxy compound and
(B) a polycarboxylic acid.

3. The binder composition of claim 2, wherein the polyhydroxy compound and the polycarboxylic acid have been used in proportions such that the ratio of equivalents of total active hydrogens from amine groups and hydroxy groups (NH+OH) to equivalents of total carboxy groups (COOH) in the binder component is within the range of about 0.4 to 2.0, the dendritic compound being used in an amount such that the equivalent ratio of NH+OH groups derived from the dendritic compound to total NH+OH groups or the equivalent ratio of COOH groups derived from the dendritic compound to total COOH groups is from 0.01 to 0.9.

4. The binder composition of claim 1 wherein the water-soluble binder component is obtained by reacting a dendritic compound with
(A) a polyamine and
(B) a polycarboxylic acid.

5. The binder composition of claim 1 wherein the water-soluble binder component is obtained by reacting a dendritic compound with
(A) an alkanolamine and
(B) a carboxylic acid anhydride.

6. The binder composition of claim 5, wherein the alkanolamine and the carboxylic acid anhydride have been used in proportions such that the ratio of equivalents of total active hydrogens from amino groups and hydroxy groups (NH+OH) to equivalents of total carboxy groups (COOH) in the binder component is within the range of about 0.4 to 2.0, the dendritic compound being used in an amount such that the equivalent ratio of NH+OH groups derived from the dendritic compound to total NH+OH groups or the equivalent ratio of COOH groups derived from the dendritic compound to total COOH groups is from 0.01 to 0.9.

7. The binder composition of claim 6, wherein the dendritic compound has been used in an amount such that the equivalent ratio of NH+OH groups derived from the dendritic compound to total NH+OH groups or the equivalent ratio of COOH groups derived from the dendritic compound to total COOH groups is from 0.05 to 0.5, preferably from 0.1 to 0.3.

8. An aqueous binder composition comprising:
(i) a water-soluble binder component obtained by reacting
(A) a polyhydroxy compound and/or an alkanolamine and/or a polyamine; and
(B) a polycarboxylic acid and/or a carboxylic acid anhydride and optionally, treating the reaction product with a base; and
(ii) a dendritic compound.

9. The binder composition of claim 8 wherein the water-soluble binder component is obtained by reacting
(A) a polyhydroxy compound and
(B) a polycarboxylic acid.

10. The binder composition of claim 8 wherein the water-soluble binder component is obtained by reacting
(A) a polyamine and
(B) a polycarboxylic acid.

11. The binder composition of claim 8 wherein the water-soluble binder component is obtained by reacting
(A) an alkanolamine and
(B) a carboxylic acid anhydride.

12. The binder composition of claim 11, wherein the alkanolamine and the carboxylic acid anhydride have been used in proportions such that the ratio of equivalents of total active hydrogens from amino groups and hydroxy groups (NH+OH) to equivalents of total carboxy groups (COOH) in the binder component is within the range of about 0.4 to 2.0.

13. The binder composition according to claim 11 or 12, wherein the dendritic compound is present in an amount such that the equivalent ratio of NH+OH groups derived from the dendritic compound to total NH+OH groups or the equivalent ratio of COOH groups derived from the dendritic compound to total COOH groups is from 0.01 to 0.5.

14. The binder composition of claim 13, wherein the dendritic compound is present in an amount such that the equivalent ratio of NH+OH groups derived from the dendritic compound to total NH+OH groups or the equivalent ratio of COOH groups derived from the dendritic compound to total COOH groups is from 0.05 to 0.3, preferably from 0.1 to 0.2.

15. The binder composition of any one of claims 5 to 7 and 11 to 14, wherein ratio of equivalents of total active hydrogens from amino groups and hydroxy groups (NH+OH) to equivalents of total carboxy groups (COOH) in the binder component is within the range of about 0.6 to 1.7, preferably 0.9 to 1.55.

16. The binder composition of any one of claims 5 to 7 and 11 to 15, wherein the carboxylic acid anhydride is selected from cycloaliphatic and/or aromatic anhydrides.

17. The binder composition of claim 16, wherein the carboxylic acid anhydride comprises a combination of a cycloaliphatic and an aromatic anhydride.

18. The binder composition of 16 or 17, wherein the cycloaliphatic anhydride is selected from tetrahydrophthalic anhydride, hexahydrophthalic anhydride and methyl-tetrahydrophthalic anhydride.

19. The binder composition of any one of claims 16 to 18, wherein the aromatic anhydride is selected from phthalic anhydride, methylphthalic anhydride, trimellitic anhydride and pyromellitic dianhydride.

20. The binder composition of any one of claims 5 to 7 and 11 to 19, wherein the alkanolamine is selected from diethanolamine, triethanolamine, diisopropanolamine, triisopropanolamine, methyldiethanolamine, ethyldiethanolamine, n-butyl-diethanolamine, methyldiisopropanolamine, ethylisopropanolamine, ethyldiisopropanolamine, 3-amino-1,2-propanediol, 2-amino-1,3-propanediol, aminoethylethanolamine and tris(hydroxymethyl)-aminomethane.

21. The binder composition of claim 20, wherein the alkanolamine is diethanolamine.

22. The binder composition of any one of claims 5 to 7 and 11 to 21, wherein part of the alkanolamine has been replaced by an amine.

23. The binder composition of claim 22, wherein up to 90%, preferably up to 50%, and more preferably up to 25% of active functional groups are amino groups.

24. The binder composition of any one of claims 5 to 7 and 11 to 21, wherein part of the alkanolamine has been replaced by a polyol.

25. The binder composition of any one of claims 1 to 24, wherein the dendritic compound is selected from dendritic polymers such as dendritic polyester polyols, polyamidoamine dendrimers, polypropyleneimine dendrimers, polylysine dendrimers, hyperbranched polyglycerol, hyperbranched polyethyleneimine, hyperbranched polyamides and hyperbranched polyester amides.

26. The binder composition of any one of claims 1 to 25, wherein the dendritic compound has a weight average molecular weight Mw of between about 400 and about 10.000, preferably between about 1.000 to about 7.000.

27. The binder composition of any one of claims 1 to 26, wherein the dendritic compound has functional groups selected from hydroxy, thio, carboxy, ester, amine, amide, imide, epoxy, nitrile and isocyanate groups.

28. The binder composition of claim 27, wherein the dendritic compound has terminal functional groups selected from hydroxy, thio, carboxy, amine, epoxy, nitrile and isocyanate groups.

29. The binder composition of claim 28, wherein the dendritic compound is present in an amount such that the equivalent ratio of terminal functional groups to total functional groups is from 0.01 to 0.50.

30. The binder composition of any one of claims 1 to 29, wherein the dendritic compound has 4 to about 100 terminal functional groups.

31. The binder composition of any one of claims 1 to 30, further comprising a curing accelerator and, optionally, other conventional binder additives.

32. A method of producing a bonded mineral fibre product which comprises the steps of contacting the mineral fibres or mineral fibre product with a binder composition according to any one of claims 1 to 31, and curing the binder composition.

33. The method of claim 32, wherein curing is effected at a curing temperature of from about 180°C to about 300°C, preferably from about 225°C to about 300°C, and more preferably from about 230°C to about 275°C.

34. Mineral fibre product comprising mineral fibres in contact with the cured binder composition according to any one of claims 1 to 31.
